# EUROPÄISCHE PATENTSCHRIFT

(11) **EP 2 256 447 B1**
(45) Veröffentlichungstag und Bekanntmachung des Hinweises auf die Patenterteilung: **03.07.2019**
(21) Anmeldenummer: 09016031.8
(22) Anmeldetag: 24.12.2009
(51) Int. Cl.: F28B 1/06, F28D 7/16, F28D 1/04, F25B 39/04

(54) **Kondensatorvorrichtung für eine Kühlanlage**
Condenser device for a cooling system
Dispositif de condensateur pour une installation de refroidissement

(30) Priorität: 29.01.2009 DE 102009006674
(43) Veröffentlichungstag der Anmeldung: 01.12.2010
(73) Patentinhaber: Rheinmetall Landsysteme GmbH, 29345 Unterlüß (DE)
(72) Erfinder: Bruhn, Ralf, 24259 Westensee (DE); Stellmacher, Jan, 20357 Hamburg (DE)
(74) Vertreter: Dietrich, Barbara

(56) Entgegenhaltungen:
- EP-A2- 1 557 308
- WO-A2-2008/040724
- DE-A1- 4 109 127
- GB-A- 1 034 776
- IT-B- 1 136 146
- KR-A- 20070 107 323
- US-A- 3 908 393

## Beschreibung

Die Erfindung betrifft eine Kondensatorvorrichtung für eine Kühlanlage, insbesondere für die Mannschaftsraumkühlanlage eines gepanzerten militärischen Fahrzeuges. Ein Kondensator in Kälteanlagen wird in der Praxis auch als Verflüssiger bezeichnet. Insbesondere betrifft die Anmeldung eine Kondensatorvorrichtung für eine Kühlanlage nach dem Oberbegriff des Anspruchs 1. Solch eine Vorrichtung ist aus der US 3,908,393 A bekannt.

Bei Kühlanlagen wird üblicherweise ein gasförmiges Kältemittel durch einen entsprechenden Verdichter (Kompressor) komprimiert und das sich dabei erwärmende Kältemittel dann einer Kondensatorvorrichtung mit luft- oder wassergekühlter Kondensatorzelle zugeführt. Das in der Kondensatorzelle verflüssigte Kältemittel gelangt anschließend zu einem Verdampfer, welcher die zu kühlende Luft entsprechend abkühlt. Das den Verdampfer verlassende, wiederum gasförmige Kältemittel wird dann erneut dem Kompressor zugeführt.

Die Kondensatorvorrichtung umfasst bei bekannten Kühlanlagen, wie sie bei militärischen Fahrzeugen im Einsatz sind, ein Gehäuse, mindestens eine in dem Gehäuse angeordnete luftgekühlte Kondensatorzelle sowie mindestens eine in dem Gehäuse angeordnete und der Kondensatorzelle vor- oder nachgeschaltete, aus Lüfter und Luftführungsgehäuse bestehende Lüftereinheit. Dabei besitzt das Gehäuse mindestens eine Lufteintrittsöffnung für die Zufuhr von Kühlluft und mindestens eine Luftaustrittsöffnung für den Austritt der erwärmten Kühlluft.

Aus der AT 411 979 B ist ein Kondensator für eine Klimaanlage bekannt. Einen Wärmeaustauscher beschreibt die DE 11 2006 003 241 T5.

Die jeweilige Kondensatorzelle bekannter Kondensatorvorrichtungen ist in der Regel flach ausgebildet und weist daher die Nachteile auf, dass zu einer optimalen Kühlung entweder große Kondensatorflächen erforderlich sind oder der Kühlluftdurchsatz durch die Kondensatorzelle relativ hoch gewählt werden muss. Bei großen Kondensatorflächen, und damit auch großen Lufteintritts- und Luftaustrittsöffnungen in dem Gehäuse der Kondensatorvorrichtung, besteht aber die Gefahr, dass die Kondensatorzelle sowie die Lüftereinheit über diese Öffnungen durch Geschosse, Splitter etc. leicht beschädigt werden kann, und zwar auch dann, wenn Schutzgitter (Grätings) vor diesen Öffnungen angeordnet sind. Hingegen sind mit einer Erhöhung des Luftdurchsatzes eine Erhöhung der Lüfterantriebsleistung sowie relativ hohe Lüftergeräusche und Kondensatorverschmutzungen verbunden.

Der Erfindung liegt die Aufgabe zugrunde, eine Kondensatorvorrichtung anzugeben, bei welcher die Kondensatorzelle zwar eine möglichst große Fläche besitzt, die gesamte Kondensatorvorrichtung aber trotzdem sehr kompakt aufgebaut ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, die Kondensatorzelle nicht flach, sondern trommelförmig auszubilden, wobei die zu kühlenden Elemente (Rohrleitungen, durch welche das Kältemittel strömt) mindestens innerhalb des die Mantelfläche bildenden ersten Wandbereiches der trommelförmigen Kondensatorzelle angeordnet sind, so dass bei der bestimmungsgemäßen Verwendung der Kondensatorvorrichtung die über die von der Lüftereinheit durch die Lufteintrittsöffnung in das Gehäuse gesaugte Kühlluft durch den ersten Wandbereich der Kondensatorzelle in deren Innenraum gelangt und dort im wesentlichen axial über eine stirnseitig angeordnete Austrittsöffnung der Kondensatorzelle sowie dann über das Luftführungsgehäuse der Lüftereinheit zu der Luftaustrittsöffnung des Gehäuses strömt.

Vorzugsweise ist die Kondensatorzelle derart aufgebaut, dass der der stirnseitigen Austrittsöffnung der Kondensatorzelle gegenüberliegende zweite Wandbereich ebenfalls zu kühlende Elemente aufnimmt, so dass bei der bestimmungsgemäßen Verwendung der Kondensatorvorrichtung die durch die Lufteintrittsöffnung in das Gehäuse gesaugte Kühlluft auch durch den zweiten Wandbereich in den Innenraum der Kondensatorzelle gelangt.

Bei einer bevorzugten Ausführungsform der Erfindung wird der erste Wandbereich der trommelförmigen Kondensatorzelle, in Umfangsrichtung gesehen, durch ein Vieleck gebildet.

Erfindungsgemäß ist die trommelförmige Kondensatorzelle von den Innenwänden des Gehäuses durch elastische Lager beabstandet angeordnet, so dass die Kondensatorzelle außenseitig vollständig mit der Kühlluft in Berührung kommen kann. Dabei kann die Führung der Kühlluft innerhalb des Gehäuses der Kondensatorvorrichtung durch entsprechende Leitbleche unterstützt werden.

Um eine möglichst kompakte Anordnung der Kondensatorvorrichtung zu erreichen, sind die mittlere Längsachse der Kondensatorzelle und die Drehachse des Lüfters miteinander fluchtend angeordnet.

Um außerdem eine Beschädigung der in dem Gehäuse der Kondensatorvorrichtung angeordneten Baugruppen (Kondensatorzelle, Lüftereinheit etc.) durch Geschosse, Splitter etc. weitgehend zu vermeiden, sollten die Wände des Gehäuses aus Panzerstahl be-stehen. Dabei empfiehlt es sich aus Kosten- und Platzgründen, an dem entsprechenden Fahrzeug bereits vorhandene Einbauräume zu verwenden (beispielsweise vorhandene Werkzeugfächer oder Kettenschultern bei Kettenfahrzeugen).

Außerdem können zum Schutz der in dem Gehäuse angeordneten Baugruppen gegen Geschosse oder Splitter etc. außenseitig vor der Lufteintrittsöffnung und/oder der Luftaustrittsöffnung des Gehäuses vorzugsweise aus mehreren Pz-Stahlteilen bestehende Grätings angeordnet werden.

Für das Herausfiltern von groben Schmutz, Insekten oder Blättern kann zusätzlich zu den Grätings außenseitig vor der Lufteintrittsöffnung und/oder der Luftaustrittsöffnung jeweils noch ein entsprechendes Schutzgitter vorgesehen sein.

Die Lufteintrittsöffnung des Gehäuses ist vorzugsweise gegenüber dem ersten Wandbereich der Kondensatorzelle angeordnet, so dass die Kühlluft bei ihrem Eintritt in das Gehäuse direkt auf den relativ langen ersten Wandbereich der Kondensatorzelle wirkt.

Bei einer weiteren Ausführungsform der Erfindung hat es sich als vorteilhaft erwiesen, wenn die Lufteintrittsöffnung mit einer Ansaughutze und die Luftaustrittsöffnung mit einer Ablufthutze versehen sind, wobei vor der Ansaughutze und der Ablufthutze außenseitig jeweils ein Schutzgitter angeordnet ist.

Weitere Einzelheiten und Vorteile der Erfindung ergeben sich aus den folgenden, anhand von Figuren erläuterten Ausführungsbeispielen.

Es zeigen:
- Fig. 1: den Längsschnitt durch ein erstes Ausführungsbeispiel einer erfindungsgemäßen Kondensatorvorrichtung, wobei im Bereich der Lufteintrittsöffnung und im Bereich der Luftaustrittsöffnung des Gehäuses der Kondensatorvorrichtung Grätings angeordnet sind;
- Fig. 2: den Längsschnitt durch ein zweites Ausführungsbeispiel einer erfindungsgemäßen Kondensatorvorrichtung, wobei im Bereich der Lufteintrittsöffnung des Gehäuses der Kondensatorvorrichtung eine Ansaughutze und im Bereich der Luftaustrittsöffnung eine Ablufthutze angeordnet ist;
- Fig. 3: einen Schnitt durch das in Fig.2 dargestellte Ausführungsbeispiel entlang der dort mit III-III bezeichneten Schnittlinie.

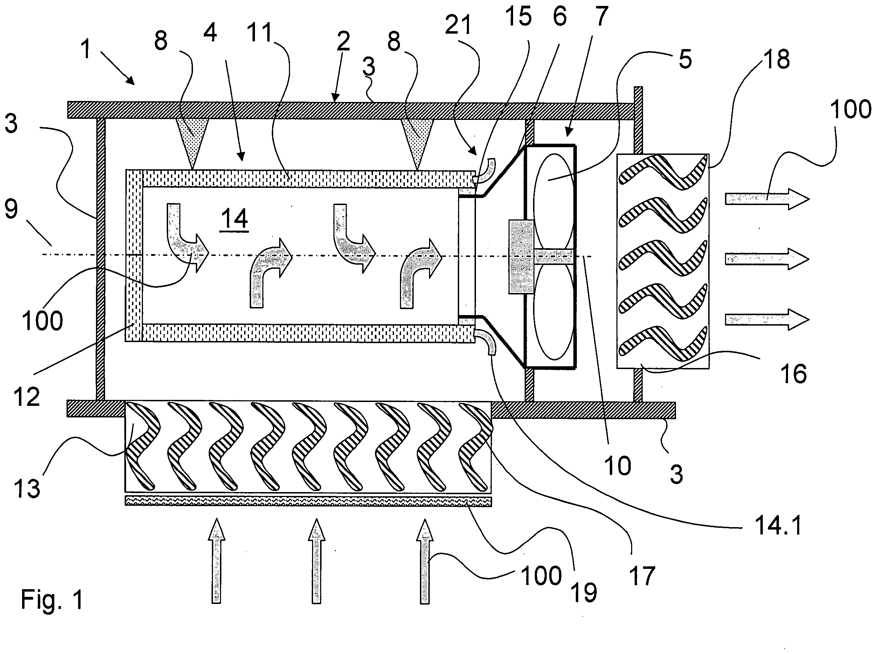

In Fig. 1 ist mit 1 eine erfindungsgemäße Kondensatorvorrichtung für eine Mannschaftsraumkühlanlage eines Panzers (nicht dargestellt) bezeichnet. Die Kondensatorvorrichtung 1 umfasst ein Gehäuse 2, bei dem es sich beispielsweise um ein vorhandenes Werkzeugfach des Panzers handelt, dessen Wände 3 aus Panzerstahl bestehen.

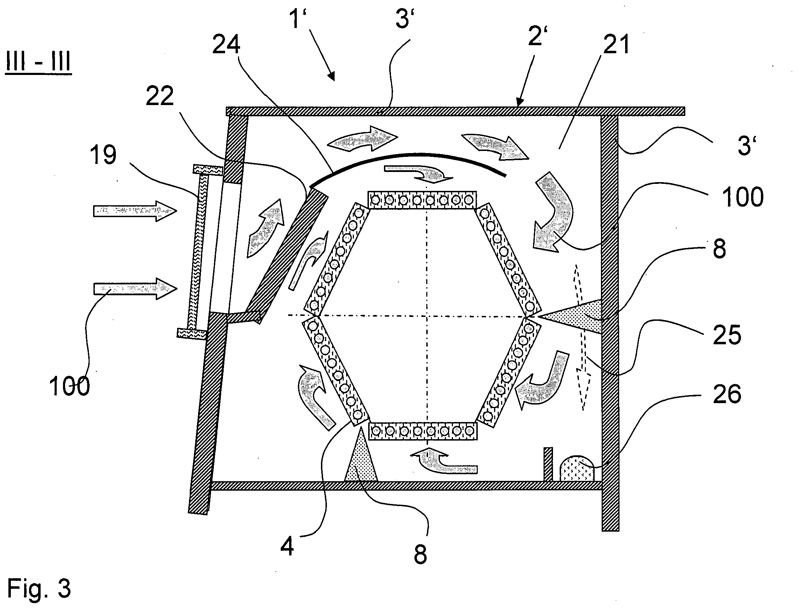

In dem Gehäuse 2 sind eine luftgekühlte Kondensatorzelle 4 sowie eine der Kondensatorzelle 4 nachgeschaltete, aus Lüfter 5 und Luftführungsgehäuse 6 bestehende Lüftereinheit 7 angeordnet. Dabei ist die Kondensatorzelle 4 von den Wänden 3 des Gehäuses 2 durch elastische Lager 8 beabstandet, derart, dass ihre mittlere Längsachse 9 und die Drehachse 10 des Lüfters 5 miteinander fluchtend angeordnet sind. Die Kondensatorzelle 4 ist trommelförmig ausgebildet und bildet umfangseitig vorzugsweise ein Sechseck (vgl. auch Fig. 3), wobei die zu kühlenden Elemente (in der Regel Rohrleitungen durch welche das Kältemittel strömt) innerhalb des die Mantelfläche bildenden ersten Wandbereiches 11 sowie innerhalb eines stirnseitigen zweiten Wandbereiches 12 verlaufen.

Bei der bestimmungsgemäßen Verwendung der Kondensatorvorrichtung 1 gelangt die von der Lüftereinheit 7 durch eine Lufteintrittsöffnung 13 in den Innenraum 21 des Gehäuses 2 gesaugte und in Fig. 1 mit 100 bezeichnete Kühlluft durch den ersten und zweiten Wandbereich 11 und 12 der Kondensatorzelle 4 in deren Innenraum 14. (Mit 14.1 ist ein umfänglich angeordneter Rohrbogen gekennzeichnet.) Dort strömt die Kühlluft 100 dann im Wesentlichen axial über eine stirnseitig angeordnete Austrittsöffnung 15 der Kondensatorzelle 4 sowie über das Luftführungsgehäuse 6 der Lüftereinheit 7 zu einer Luftaustrittsöffnung 16 des Gehäuses 2 und gelangt dann ins Freie.

Wie Fig. 1 unmittelbar entnommen werden kann, ist die Lufteintrittsöffnung 13 des Gehäuses 2 gegenüber dem ersten Wandbereich 11 der Kondensatorzelle 4 angeordnet. Sowohl außenseitig vor der Lufteintrittsöffnung 13 als auch vor der Luftaustrittsöffnung 16 sind zum Schutz gegen Geschosse oder deren Teile jeweils mindestens ein aus mehreren Stahlblechteilen bestehendes Gräting 17, 18 angeordnet. Außerdem ist vor dem Gräting 17 für das Herausfiltern von groben Schmutz, Insekten oder Blättern außenseitig ein Schutzgitter 19 vorgesehen.

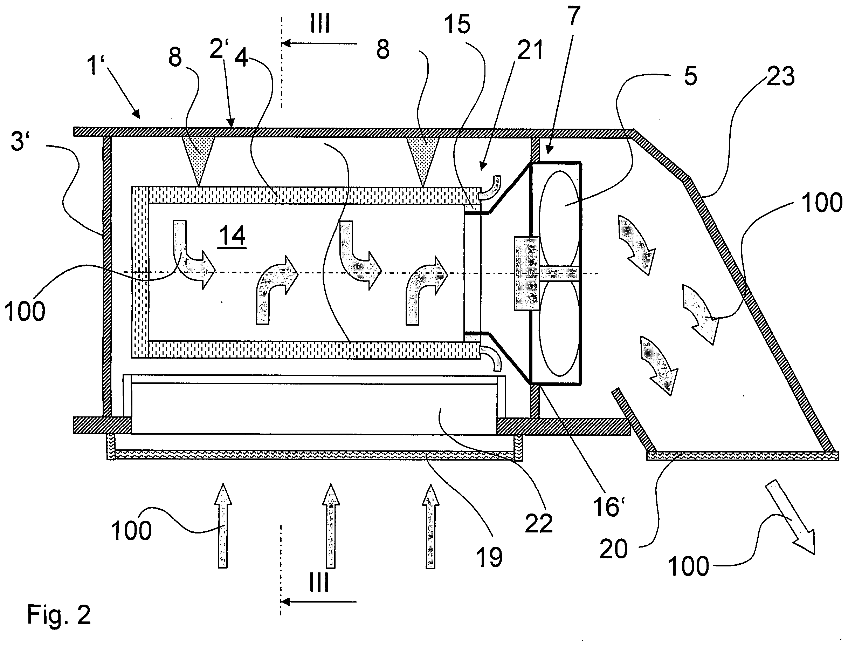

Fig. 2 zeigt ein weiteres Ausführungsbeispiel einer mit 1' bezeichneten erfindungsge-mäßen Kondensatorvorrichtung, deren Aufbau im Wesentlichen dem Aufbau der vor-stehend beschriebenen Kondensatorvorrichtung 1 entspricht. Das mit 2' bezeichnete Gehäuse weist in diesem Fall lediglich zum Schutz der Kondensatorzelle 4 und der Lüftereinheit 7 gegen Geschoßsplitter etc. im Bereich seiner Lufteintrittsöffnung 13' statt eines Grätings eine Ansaughutze 22 mit vorgeschaltetem Schutzgitter 19 und im Bereich seiner Luftaustrittsöffnung 16' eine Ablufthutze 23 mit einem Schutzgitter 20 auf.

Wie außerdem Fig. 3 entnehmbar ist, können zur besseren Führung der Kühlluft 100 Leitbleche 24 um die trommelförmige Kondensatorzelle 4 herum angeordnet sein, um gegebenenfalls noch vorhandene und durch einen Pfeil angedeutete Staubpartikel 25 sowie Wassertröpfchen 26 durch die auf sie wirkenden Zentrifugalkräfte an der Wand 3' des Gehäuses 2' abzuscheiden, die somit nicht in die feinen Durchtrittsflächen der Kondensatorzelle 4 gelangen.

Die Erfindung ist selbstverständlich nicht auf die vorstehend beschriebenen Ausführungsbeispiele beschränkt. So kann die Kondensatorzelle beispielsweise auch einen kreiszylinderförmigen Aufbau besitzen oder statt eines sechseckigen beispielsweise einen vier- oder achteckigen Umfangsverlauf aufweisen.

### Bezugszeichenliste

- 1,1': Kondensatorvorrichtungen
- 2,2': Gehäuse
- 3,3': Wände
- 4: Kondensatorzelle
- 5: Lüfter
- 6: Luftführungsgehäuse
- 7: Lüftereinheit
- 8: Lager
- 9: Längsachse
- 10: Drehachse
- 11: erster Wandbereich
- 12: zweiter Wandbereich
- 13,13': Lufteintrittsöffnungen
- 14: Innenraum (Kondensatorzelle)
- 14.1: Rohrbogen
- 15: Austrittsöffnung
- 16,16': Luftaustrittsöffnungen
- 17,18: Grätings
- 19,20: Schutzgitter
- 21: Innenraum (Gehäuse)
- 22: Ansaughutze
- 23: Ablufthutze
- 24: Leitblech
- 25: Staubpartikel
- 26: Wassertröpfchen

- 100: Kühlluft

## Patentansprüche

1. Kondensatorvorrichtung für eine Kühlanlage mit den Merkmalen:
a) die Kondensatorvorrichtung (1; 1') umfasst ein Gehäuse (2; 2'), mindestens eine in dem Gehäuse (2; 2') angeordnete, durch Luft kühlbare Kondensatorzelle (4) sowie mindestens eine in dem Gehäuse (2; 2') angeordnete und der Kondensatorzelle (4) vor- oder nachgeschaltete, aus Lüfter (5) und Luftführungsgehäuse (6) bestehende Lüftereineinheit (7);
b) das Gehäuse (2; 2') weist mindestens eine Lufteintrittsöffnung (13; 13') für die Zufuhr von Kühlluft (100) und mindestens eine Luftaustrittsöffnung (16; 16') für den Austritt der erwärmten Kühlluft (100) auf;
c) die Kondensatorzelle (4) ist trommelförmig ausgebildet;
d) die mittlere Längsachse der Kondensatorzelle (4) und die Drehachse des Lüfters (5) sind miteinander fluchtend angeordnet,
wobei die Kondensatorvorrichtung **dadurch gekennzeichnet ist, dass** die trommelförmige Kondensatorzelle (4) von den Wänden (3; 3') des Gehäuses (2; 2') durch elastische Lager (8) beabstandet angeordnet ist.

2. Kondensatorvorrichtung nach Anspruch 1, **dadurch gekennzeichnet, dass** die zu kühlenden Elemente mindestens innerhalb des die Mantelfläche bildenden ersten Wandbereiches (11) der trommelförmigen Kondensatorzelle (4) angeordnet sind, so dass bei der bestimmungsgemäßen Verwendung der Kondensatorvorrichtung (1; 1') die über die von der Lüftereinheit (7) durch die Lufteintrittsöffnung (13; 13') in das Gehäuse (2; 2') gesaugte Kühlluft (100) durch den ersten Wandbereich (11) der Kondensatorzelle (4) in deren Innenraum (14) gelangt und dort im wesentlichen axial über eine stirnseitig angeordnete Austrittsöffnung (15) der Kondensatorzelle (4) sowie dann über das Luftführungsgehäuse (6) der Lüftereinheit (7) zu der Luftaustrittsöffnung (16; 16') des Gehäuses strömt.

3. Kondensatorvorrichtung nach Anspruch 1 oder 2, **dadurch gekennzeichnet, dass** der der stirnseitigen Austrittsöffnung (15) der Kondensatorzelle (4) gegenüberliegende zweite Wandbereich (12) ebenfalls zu kühlende Elemente aufnimmt, so dass bei der bestimmungsgemäßen Verwendung der Kondensatorvorrichtung (1; 1') die durch die Lufteintrittsöffnung (13; 13') in das Gehäuse (2; 2') gesaugte Kühlluft (100) auch durch den zweiten Wandbereich (12) in den Innenraum (14) der Kondensatorzelle (4) gelangt.

4. Kondensatorvorrichtung nach Anspruch 1 oder 2, **dadurch gekennzeichnet, dass** der erste Wandbereich (11) der trommelförmigen Kondensatorzelle (4), in Umfangsrichtung gesehen, durch ein Vieleck gebildet wird.

5. Kondensatorvorrichtung nach Anspruch 4, **dadurch gekennzeichnet, dass** es sich bei dem Vieleck um ein Sechseck handelt.

6. Kondensatorvorrichtung nach einem der Ansprüche 1 bis 5, **dadurch gekennzeichnet, dass** die Wände (3; 3') des Gehäuses (2; 2') aus Panzerstahl bestehen.

7. Kondensatorvorrichtung nach einem der Ansprüche 1 bis 6, **dadurch gekennzeichnet, dass** die Lufteintrittsöffnung (13; 13') des Gehäuses (2; 2') gegenüber dem ersten Wandbereich (11) der Kondensatorzelle (4) angeordnet ist.

8. Kondensatorvorrichtung nach einem der Ansprüche 1 bis 7, **dadurch gekennzeichnet, dass** außenseitig vor der Lufteintrittsöffnung (13) und/oder der Luftaustrittsöffnung (16) zum Schutz gegen Geschosse oder deren Teile jeweils mindestens ein aus mehreren vorzugsweise Pz-Stahlteilen bestehendes Gräting (17, 18) angeordnet ist.

9. Kondensatorvorrichtung nach einem der Ansprüche 1 bis 8, **dadurch gekennzeichnet, dass** sich außenseitig vor der Lufteintrittsöffnung (13; 13') und/oder der Luftaustrittsöffnung (16; 16') jeweils ein Schutzgitter (19, 20) für das Herausfiltern von groben Schmutz, Insekten oder Blättern befindet.

10. Kondensatorvorrichtung nach einem der Ansprüche 1 bis 9, **dadurch gekennzeichnet, dass** die Lufteintrittsöffnung (13') mit einer Ansaughutze (22) und die Luftaustrittsöffnung (16') durch eine Ablufthutze (23) versehen ist, wobei vor der Ansaughutze (22) und/oder der Ablufthutze (23) außenseitig jeweils ein Schutzgitter (19, 20) angeordnet ist.

11. Kondensatorvorrichtung (1) nach einem der Ansprüche 1 bis 10, **dadurch gekennzeichnet, dass** Leitbleche (24) um die trommelförmige Kondensatorzelle (4) herum angeordnet sind.

12. Mannschaftsraumkühlanlage mit einer Kondensatorvorrichtung (1) nach einem der Ansprüche 1 bis 11.

13. Gepanzertes militärisches Fahrzeug mit einer Kondensatorvorrichtung (1) nach einem der Ansprüche 1 bis 11.

## Claims

1. Condenser device for a cooling system with the features:
a) the condenser device (1; 1') comprises a housing (2; 2'), at least one condenser cell (4) arranged in the housing (2; 2') and cooled by air, and at least one fan unit (7) arranged in the housing (2; 2'), connected upstream or downstream of the condenser cell (4) and consisting of a fan (5) and an air guiding housing (6);
b) the housing (2; 2') has at least one air inlet opening (13; 13') for supplying cooling air (100) and at least one air outlet opening (16; 16') for letting out the warmed cooling air (100);
c) the condenser cell (4) is of a drum-shaped form;
d) the central longitudinal axis of the condenser cell (4) and the axis of rotation of the fan (5) are arranged in line with one another,
wherein the condenser device is **characterized in that** the drum-shaped condenser cell (4) is arranged at a distance from the walls (3; 3') of the housing (2; 2') by elastic bearings (8).

2. Condenser device according to Claim 1, **characterized in that** the elements to be cooled are arranged at least within the first wall region (11) of the drum-shaped condenser cell (4) forming the lateral surface, so that during the use of the condenser device (1; 1') as intended the cooling air (100) sucked into the housing (2; 2') via the by the fan unit (7) through the air inlet opening (13; 13') passes through the first wall region (11) of the condenser cell (4) into the interior space (14) of the latter and flows there substantially axially via an outlet opening (15) arranged at the end face of the condenser cell (8) and also then via the air guiding housing (6) of the fan unit (7) to the air outlet opening (16; 16') of the housing.

3. Condenser device according to Claim 1 or 2, **characterized in that** the second wall region (12), lying opposite the outlet opening (15) at the end face of the condenser cell (4), likewise receives elements to be cooled, so that during the use of the condenser device (1; 1') as intended the cooling air (100) sucked into the housing (2; 2') through the air inlet opening (13; 13') also passes through the second wall region (12) into the interior space (14) of the condenser cell (4).

4. Condenser device according to Claim 1 or 2, **characterized in that** the first wall region (11) of the drum-shaped condenser cell (4), seen in the circumferential direction, is formed by a polygon.

5. Condenser device according to Claim 4, **characterized in that** the polygon is a hexagon.

6. Condenser device according to one of Claims 1 to 5, **characterized in that** the walls (3; 3') of the housing (2; 2') consist of armoured steel.

7. Condenser device according to one of Claims 1 to 6, **characterized in that** the air inlet opening (13; 13') of the housing (2; 2') is arranged opposite the first wall region (11) of the condenser cell (4).

8. Condenser device according to one of Claims 1 to 7, **characterized in that** at least one grating (17, 18), consisting of multiple, preferably armoured steel parts, is respectively arranged on the outside in front of the air inlet opening (13) and/or the air outlet opening (16) for protection from projectiles or parts thereof.

9. Condenser device according to one of Claims 1 to 8, **characterized in that** a protective grille (19, 20) for filtering out coarse dirt, insects or leaves, is respectively located on the outside in front of the air inlet opening (13; 13') and/or the air outlet opening (16; 16').

10. Condenser device according to one of Claims 1 to 9, **characterized in that** the air inlet opening (13') is provided with an intake duct (22) and the air outlet opening (16') is provided by an exhaust air duct (23), wherein a protective grille (19) is respectively arranged on the outside in front of the intake duct (22) and/or the exhaust air duct (23).

11. Condenser device (1) according to one of Claims 1 to 10, **characterized in that** baffles (24) are arranged around the drum-shaped condenser cell (4).

12. Crew compartment cooling system with a condenser device (1) according to one of Claims 1 to 11.

13. Armoured military vehicle with a condenser device (1) according to one of Claims 1 to 11.

## Revendications

1. Dispositif de condenseur pour une installation de refroidissement présentant les caractéristiques suivantes:
a) le dispositif de condenseur (1; 1') comprend un boîtier (2; 2'), au moins une cellule de condenseur (4) disposée dans le boîtier (2; 2') et pouvant être refroidie à l'air, ainsi qu'au moins une unité de ventilateur (7) disposée dans le boîtier (2; 2') et installée avant ou après la cellule de condenseur (4), et se composant du ventilateur (5) et d'un boîtier de guidage d'air (6);
b) le boîtier (2; 2') présente au moins une ouverture d'entrée d'air (13; 13') pour l'admission d'air de refroidissement (100) et au moins une ouverture de sortie d'air (16; 16') pour la sortie de l'air de refroidissement échauffé (100);
c) la cellule de condenseur (4) est réalisée en forme de tambour;
d) l'axe longitudinal central de la cellule de condenseur (4) et l'axe de rotation du ventilateur (5) sont disposés en alignement l'un avec l'autre,
dans lequel le dispositif de condenseur est **caractérisé en ce que** la cellule de condenseur en forme de tambour (4) est disposée à distance des parois (3; 3') du boîtier (2; 2') au moyen d'appuis élastiques (8).

2. Dispositif de condenseur selon la revendication 1, **caractérisé en ce que** les éléments à refroidir sont disposés au moins à l'intérieur de la première région de paroi (11) de la cellule de condenseur en forme de tambour (4) qui forme la surface latérale, de telle manière que lors de l'utilisation conforme du dispositif de condenseur (1; 1') l'air de refroidissement (100) aspiré dans le boîtier (2; 2') à travers l'ouverture d'entrée d'air (13; 13') au moyen du par l'unité de ventilateur (7) arrive à travers la première région de paroi (11) de la cellule de condenseur (4) dans l'espace intérieur de celle-ci (14) et s'y écoule essentiellement axialement par une ouverture de sortie disposée frontalement (15) de la cellule de condenseur (4) et ensuite par le boîtier de guidage d'air (6) de l'unité de ventilateur (7) vers l'ouverture de sortie d'air (16; 16') du boîtier.

3. Dispositif de condenseur selon une revendication 1 ou 2, **caractérisé en ce que** la deuxième région de paroi (12) opposée à l'ouverture de sortie frontale (15) de la cellule de condenseur (4) contient également des éléments à refroidir, de telle manière que lors de l'utilisation conforme du dispositif de condenseur (1; 1') l'air de refroidissement (100) aspiré dans le boîtier (2; 2') à travers l'ouverture d'entrée d'air (13; 13') arrive aussi dans l'espace intérieur (14) de la cellule de condenseur (4) à travers la deuxième région de paroi (12).

4. Dispositif de condenseur selon une revendication 1 ou 2, **caractérisé en ce que** la première région de paroi (11) de la cellule de condenseur en forme de tambour (4) est formée, vue en direction périphérique, par un polygone.

5. Dispositif de condenseur selon la revendication 4, **caractérisé en ce que** le polygone est un hexagone.

6. Dispositif de condenseur selon l'une quelconque des revendications 1 à 5, **caractérisé en ce que** les parois (3; 3') du boîtier (2; 2') sont constituées d'acier de blindage.

7. Dispositif de condenseur selon l'une quelconque des revendications 1 à 6, **caractérisé en ce que** l'ouverture d'entrée d'air (13; 13') du boîtier (2; 2') est disposée en face de la première région de paroi (11) de la cellule de condenseur (4).

8. Dispositif de condenseur selon l'une quelconque des revendications 1 à 7, **caractérisé en ce qu'**au moins un grillage (17, 18) composé de parties de préférence en acier de blindage est disposé à l'extérieur respectivement devant l'ouverture d'entrée d'air (13; 13') et/ou l'ouverture de sortie d'air (16) à titre de protection contre des projectiles ou des parties de ceux-ci.

9. Dispositif de condenseur selon l'une quelconque des revendications 1 à 8, **caractérisé en ce qu'**une grille de protection (19, 20) se trouve à l'extérieur respectivement devant l'ouverture d'entrée d'air (13; 13') et/ou l'ouverture de sortie d'air (16') pour le filtrage de grosses impuretés, d'insectes ou de feuilles.

10. Dispositif de condenseur selon l'une quelconque des revendications 1 à 9, **caractérisé en ce que** l'ouverture d'entrée d'air (13') est munie d'un capot d'aspiration (22) et l'ouverture de sortie d'air (16') est munie par un capot d'évacuation d'air (23), dans lequel une grille de protection (19, 20) est disposée extérieurement respectivement devant le capot d'aspiration d'air (22) et/ou le capot d'évacuation d'air (23).

11. Dispositif de condenseur (1) selon l'une quelconque des revendications 1 à 10, **caractérisé en ce que** des déflecteurs (24) sont disposés autour de la cellule de condenseur en forme de tambour (4).

12. Installation de refroidissement de poste d'équipage avec un dispositif de condenseur (1) selon l'une quelconque des revendications 1 à 11.

13. Véhicule militaire blindé avec un dispositif de condenseur (1) selon l'une quelconque des revendications 1 à 11.
